# EUROPÄISCHE PATENTANMELDUNG

(11) **EP 2 857 588 A1**
(43) Veröffentlichungstag der Anmeldung: **08.04.2015**
(21) Anmeldenummer: 13187170.9
(22) Anmeldetag: 02.10.2013
(51) Int. Cl.: E02D 27/42

(54) **Verfahren und Vorrichtung zur Erstellung eines Bauwerkes, insbesondere eines Offshore-Bauwerkes**

(71) Anmelder: HOCHTIEF Solutions AG, 45128 Essen (DE)
(72) Erfinder: BRANDSTÄDTER Oliver, D-13088 Berlin (DE)
(74) Vertreter: Rohmann, Michael

(57) **Zusammenfassung**

Verfahren zur Erstellung eines Offshore-Bauwerkes, wobei zumindest ein zumindest bereichsweise hohler Gründungspfahl in den Erdboden eingebracht wird, wobei auf den Gründungspfahl eine Gründungsstruktur mit einer Auflagereinrichtung aufgebracht wird, so dass die Auflagereinrichtung auf dem Gründungspfahl aufliegt. Die Gründungsstruktur weist zumindest einen in den hohlen Gründungspfahl hineinragenden Gründungsfortsatz auf, wobei zwischen dem Gründungsfortsatz und dem Gründungspfahl zumindest ein Spaltraum ausgebildet ist. Die Auflagereinrichtung weist zumindest eine untere Lastverteilungsplatte sowie zumindest eine obere Lastverteilungsplatte auf und zwischen den Lastverteilungsplatten ist zumindest eine Schicht zumindest eines thermisch erweichbaren und/oder thermisch aufschmelzbaren und/oder thermisch zersetzbaren Lastübertragungsmaterials angeordnet. Nach dem Aufbringen der Gründungsstruktur mit der Auflagereinrichtung auf dem Gründungspfahl wird der Spaltraum mit zumindest einem Vergussmaterial gefüllt. Nach dem Erhärten bzw. nach dem vollständigen Erhärten des Vergussmaterials wird das Lastübertragungsmaterial durch Erwärmen bzw. Erhitzen zumindest zum Teil thermisch erweicht und/oder thermisch aufgeschmolzen und besonders bevorzugt thermisch zersetzt.

## Beschreibung

Die Erfindung betrifft ein Verfahren zur Erstellung eines Bauwerkes, insbesondere eines Offshore-Bauwerkes und vor allem zur Erstellung einer Offshore-Windkraftanlage, wobei zumindest ein zumindest bereichsweise hohler Gründungspfahl in den Erdboden, insbesondere in den Meeresboden eingebracht wird, wobei auf den Gründungspfahl eine Gründungsstruktur mittels einer Auflagereinrichtung aufgebracht wird und wobei die Auflagereinrichtung auf dem Gründungspfahl aufliegt. Die Erfindung bezieht sich weiterhin auf eine entsprechende Vorrichtung zur Erstellung eines Bauwerkes, insbesondere eines Offshore-Bauwerkes. - Offshore-Bauwerke meint bekanntlich Bauwerke, die auf dem Meeresboden verankert werden. Obwohl die Erfindung vorzugsweise eine Offshore-Windkraftanlage betrifft, kann sie auch für andere Offshore-Bauwerke, wie Bohrinseln, Brücken und dergleichen eingesetzt werden.

Verfahren und Vorrichtungen der eingangs genannten Art sind aus der Praxis grundsätzlich bekannt. Bei diesen bekannten Verfahren wird zunächst zumindest ein innen hohler Gründungspfahl im Meeresboden verankert. Anschließend wird mittels einer Auflagereinrichtung - sogenannter Pile Stopper - die Gründungsstruktur auf dem Gründungspfahl bzw. den Gründungspfählen aufgebracht. Die jeweilige Auflagereinrichtung bzw. der Pile Stopper liegt dabei auf dem Gründungspfahl auf und dient zur zeitweisen Auflagerung der Gründungstruktur auf dem Gründungspfahl. Die Aufgabe der Auflagereinrichtung bzw. des Pile Stoppers besteht darin, temporär das gesamte Eigengewicht der Gründungsstruktur sowie an der Gründungsstruktur angreifende Kräfte, insbesondere aufgrund von Wind- und Meeresbewegungen sicher in den Gründungspfahl zu übertragen. Außerdem dient sie zum Ausgleich herstellungsbedingter Toleranzen bzw. Lagerabweichungen der vorab hergestellten Pfähle. Zur endgültigen Fixierung und Auflagerung der Gründungsstruktur wird ein Ringspalt zwischen der Innenwandung des Gründungspfahls und einem in den Hohlraum des Gründungspfahls ragenden Gründungsfortsatz der Gründungsstruktur mit Vergussmaterial verpresst. Nach Erhärten des Vergussmaterials soll die Lastabtragung der auf die Gründungsstruktur einwirkenden Lasten zumindest größtenteils über das erhärtete Vergussmaterial erfolgen. Die temporäre Auflagerung soll nahezu wirkungslos sein und sich nicht an der Lastabtragung beteiligen. Dieses Ziel wird leider in der Praxis oftmals nur unzureichend bzw. nicht zufriedenstellend erreicht.

Aus der Praxis ist es zunächst bekannt, die Gründungsstruktur mittels einer ringförmigen Auflagereinrichtung aus Metall auf die Oberkante des Gründungspfahls aufzulegen. Nach dem Vergießen des Ringspaltes mit dem Vergussmaterial und nach Erhärtung des Vergussmaterials muss diese Auflagereinrichtung von Tauchern entfernt werden und gegebenenfalls unter Wasser freigeschnitten werden, damit die Lastabtragung wie vorgesehen ausschließlich über den Vergussbereich erfolgt. Diese Maßnahmen sind äußerst aufwändig, kostspielig sowie im Hinblick auf den Arbeitsschutz nicht wünschenswert.

Weiterhin ist es aus der Praxis bekannt, die ringförmige Auflagereinrichtung in einer Sandwichbauweise auszuführen. Dabei besteht die auf der Oberkante des Gründungspfahls aufliegende Sandwichkonstruktion aus zwei Stahlplatten sowie einer dazwischen angeordneten Schicht aus elastischem Material. Eventuell können Abstandshalter zum Toleranzausgleich zwischengeschaltet werden. Nach dem Vergießen und Erhärten des Vergussmaterials wird bei diesem Verfahren die Last der Gründungsstruktur aber nicht - wie gewünschtim Wesentlichen über die Vergussverbindung abgetragen. Vielmehr ist es so, dass die bereits temporär eingeprägten ständigen Lasten weiterhin, zumindest zum Großteil, über die Auflagereinrichtung in den Pfahl eingeleitet werden. Lediglich die zusätzlichen bzw. nachträglich aufgebrachten ständigen Lasten sowie die nichtständigen Lasten z.B. aus Wind- und Wellengang werden sowohl über die Auflagereinrichtung als auch die Vergussverbindung abgetragen. Dabei erfolgt die Lastverteilung auf beide Verbindungen im Verhältnis ihrer Steifigkeiten. Aufgrund der Weichheit der Sandwichkonstruktion bedeutet dies zwar einen höheren Lastabtrag über die Vergussverbindung, jedoch wird das Ziel der nahezu ausschließlichen Lastabtragung über die Vergusskonstruktion nicht erreicht. Dies muss bei der Planung und Realisierung dieser Konstruktion in aufwändiger Weise berücksichtigt werden.

Demgegenüber liegt der Erfindung das technische Problem zugrunde, ein Verfahren der eingangs genannten Art anzugeben, bei dem die vorstehend geschilderten Nachteile vermieden werden können und mit dem auf einfache und wenig aufwändige Weise eine vollständige bzw. quasi vollständige Lastabtragung über die Vergussverbindung erreicht werden kann. Der Erfindung liegt weiterhin das technische Problem zugrunde, eine entsprechende Vorrichtung anzugeben.

Zur Lösung dieses technischen Problems lehrt die Erfindung ein Verfahren zur Erstellung eines Bauwerkes, insbesondere eines Offshore-Bauwerkes und vor allem zur Erstellung einer Offshore-Windkraftanlage, wobei zumindest ein zumindest bereichsweise hohler Gründungspfahl in den Erdboden - insbesondere in den Meeresboden - eingebracht wird, wobei auf den Gründungspfahl eine Gründungsstruktur mittels einer Auflagereinrichtung aufgebracht wird, so dass die Auflagereinrichtung auf dem Gründungspfahl aufliegt,
wobei die Gründungsstruktur zumindest einen - im aufgesetzten Zustand der Gründungsstruktur - in den hohlen Gründungspfahl hineinragenden Gründungsfortsatz aufweist, wobei zwischen dem Gründungsfortsatz und der Innenwandung des hohlen Gründungspfahls zumindest ein Spaltraum bzw. ein Ringspalt ausgebildet ist, wobei die Auflagereinrichtung zumindest eine untere Lastverteilungsplatte sowie zumindest eine obere Lastverteilungsplatte aufweist, wobei zwischen den Lastverteilungsplatten zumindest eine Schicht zumindest eines thermisch erweichbaren und/oder thermisch aufschmelzbaren und/oder thermisch zersetzbaren Lastübertragungsmaterials angeordnet ist,
wobei nach dem Aufbringen der Gründungsstruktur und der Auflagereinrichtung auf dem Gründungspfahl der Spaltraum zwischen Gründungsfortsatz und Gründungspfahl mit zumindest einem Vergussmaterial gefüllt bzw. ausgefüllt wird und wobei insbesondere nach dem Erhärten bzw. nach dem vollständigen Erhärten des Vergussmaterials das Lastübertragungsmaterial der Auflagereinrichtung durch Erwärmen bzw. Erhitzen zumindest zum Teil - vorzugsweise größtenteils - thermisch erweicht und/oder thermisch aufgeschmolzen und besonders bevorzugt thermisch zersetzt wird.

Es liegt im Rahmen der Erfindung, dass die Gründungspfähle durch Einrammen, Einrütteln oder Bohren im Meeresboden verankert werden. Zweckmäßigerweise besteht der Gründungspfahl aus Stahl oder aus Stahlbeton. Bei dem Gründungspfahl handelt es sich vorzugsweise um einen Hohlzylinder. - Die Gründungsstruktur kann als Fachwerkkonstruktion bzw. Stahlfachwerkkonstruktion ausgebildet werden und insbesondere Bestandteil sogenannter Tripods oder Jackets sein, die an drei oder mehr Punkten mit Gründungspfählen im Meeresboden verankert sind. Zweckmäßigerweise besteht die Gründungsstruktur aus Stahl oder aus Stahlbeton. Grundsätzlich kann sie auch aus einem anderen Material bestehen. Die Gründungsstruktur weist zumindest einen im aufgesetzten Zustand in den Gründungspfahl ragenden Gründungsfortsatz auf sowie zumindest eine auf dem Gründungspfahl aufliegende Auflagereinrichtung und einen über die Gründungspfähle hinausragenden Gründungsaufsatz auf. Bei dem Gründungsaufsatz kann es sich z.B. um einen Mast für eine Windkraftanlage handeln.

Es liegt im Rahmen der Erfindung, dass die Auflagereinrichtung bzw. der Pile Stopper im aufgebrachten Zustand der Gründungsstruktur auf dem Gründungspfahl bzw. auf der Oberkante des Gründungspfahls aufliegt. Dabei können zum Toleranzausgleich Abstandshalter zwischengeschaltet sein. Es liegt weiterhin im Rahmen der Erfindung, dass mit einer Auflagereinrichtung gearbeitet wird, die eine größere radiale Ausdehnung aufweist als der Gründungspfahl. Empfohlenermaßen weisen zumindest die beiden Lastverteilungsplatten und vorzugsweise auch die Schicht aus dem Lastübertragungsmaterial eine größere radiale Ausdehnung auf als der Gründungspfahl. Insbesondere die untere Lastverteilungsplatte hat eine größere radiale Ausdehnung als der Gründungspfahl.

Es empfiehlt sich, dass die untere Lastverteilungsplatte und/oder die obere Lastverteilungsplatte aus einem Metall bzw. im Wesentlichen aus einem Metall und vorzugsweise aus Stahl bzw. im Wesentlichen aus Stahl bestehen. - Nach besonders bevorzugter Ausführungsform der Erfindung ist die Auflagereinrichtung mit der oberen Lastverteilungsplatte an der Gründungsstruktur angeschlossen bzw. an der Gründungsstruktur fixiert. Zweckmäßigerweise ist die obere Lastverteilungsplatte an der Gründungsstruktur angeschweißt und bevorzugt stahlbaumäßig ausgebildet, einschließlich erforderlicher Aussteifungen, Abstandsbleche, etc.. Insoweit ergibt sich eine feste Verbindung zwischen Auflagereinrichtung bzw. Pile Stopper und Gründungsstruktur, die während des Transports und der Verladung der Baukomponenten vorteilhaft ist. - Es liegt fernerhin im Rahmen der Erfindung, dass die untere Lastverteilungsplatte nicht fest mit der Gründungsstruktur verbunden ist bzw. nicht an der Gründungsstruktur fixiert ist und vor allem nicht an der Gründungsstruktur angeschweißt ist. Zweckmäßigerweise ist die untere Lastverteilungsplatte über das Lastübertragungsmaterial bzw. im Wesentlichen über das Lastübertragungsmaterial mit der oberen Lastverteilungsplatte verbunden. Es ist möglich, dass die untere Lastverteilungsplatte über weitere Abstandselemente mit der oberen Lastverteilungsplatte verbunden ist. Dann ist aber empfohlenermaßen vorgesehen, dass die Abstandselemente beim Erwärmen bzw. Erhitzen des Lastübertragungsmaterials versagen bzw. brechen oder dergleichen, so dass möglichst keine Kräfte bzw. Lasten von der oberen Lastverteilungsplatte in die untere Lastverteilungsplatte übertragen werden. Es liegt im Rahmen der Erfindung, dass die untere Lastverteilungsplatte mit der Maßgabe ausgelegt und angeordnet ist, dass nach dem Erwärmen bzw. Erhitzen und nach dem Erweichen und/oder Aufschmelzen und/oder Zersetzen des Lastübertragungsmaterials keine oder im Wesentlichen keine Kräfte bzw. Lasten von der Gründungsstruktur auf die untere Lastverteilungsplatte übertragen werden bzw. über die untere Lastverteilungsplatte in den Gründungspfahl übertragen werden.

Zur erfindungsgemäßen Erstellung eines Offshore-Bauwerkes, insbesondere einer Offshore-Windkraftanlage wird zweckmäßigerweise wie folgt gearbeitet. Zunächst werden die Gründungspfähle auf den Meeresboden abgesenkt und im Meeresboden verankert, insbesondere in den Meeresboden eingerammt, einvibriert oder eingebohrt. Anschließend wird die Gründungsstruktur in das Meerwasser abgesenkt, bis die jeweilige Auflagereinrichtung auf dem Gründungspfahl bzw. auf der Oberkante des Gründungspfahls aufliegt. Dabei liegt die untere Lastverteilungsplatte auf der Oberkante des Gründungspfahls auf. Es wurde bereits dargelegt, dass zum Toleranzausgleich bzw. zur Höhenjustierung Abstandshalter zwischen der unteren Lastverteilungsplatte und dem Gründungspfahl vorgesehen sein können. Diese temporäre Auflagesituation bleibt solange erhalten, bis die endgültige Fixierung nach Aushärten des Vergussmaterials wirksam wird.

Vorzugsweise ist der Gründungsfortsatz der Gründungsstruktur über seinen Umfang von dem Spaltraum zwischen Gründungsfortsatz und der Innenwandung des Gründungspfahls umgeben, wobei zweckmäßigerweise der Gründungsfortsatz zylinderförmig bzw. im Wesentlichen zylinderförmig ausgebildet ist. Wie weiter oben bereits dargelegt, handelt es sich bei dem Gründungspfahl empfohlenermaßen um einen Hohlzylinder. Wenn der Gründungsfortsatz nach bevorzugter Ausführungsform ebenfalls Zylinderform aufweist, ist der Spaltraum zwischen Gründungsfortsatz und Innenwandung des Gründungspfahls als Ringspalt ausgeführt. Nach einer empfohlenen Ausführungsform der Erfindung wird der Gründungsfortsatz zentralmittig in dem Gründungspfahl angeordnet und dann wird ein konzentrischer Ringspalt zwischen Gründungsfortsatz und Gründungspfahl ausgebildet. Zweckmäßigerweise wird der Spaltraum bzw. der Ringspalt zwischen Gründungsfortsatz und Gründungspfahl mit einem Vergussmörtel und/oder mit Zement gefüllt bzw. ausgefüllt. Als Zement kann dabei Portlandzement eingesetzt werden.

Im Rahmen des erfindungsgemäßen Verfahrens soll nach dem Erhärten des Vergussmaterials die Last der Gründungsstruktur über die Vergussverbindung bzw. im Wesentlichen über die Vergussverbindung übertragen werden. Erfindungsgemäß wird dazu nach dem Erhärten bzw. nach dem vollständigen Erhärten des Vergussmaterials das Lastübertragungsmaterial der Auflagereinrichtung erwärmt bzw. erhitzt, so dass das Lastübertragungsmaterial thermisch erweicht und/oder thermisch aufschmilzt und besonders bevorzugt sich thermisch zersetzt. - Es empfiehlt sich, dass das Lastübertragungsmaterial der Auflagereinrichtung mit zumindest einem Heizelement erwärmt bzw. erhitzt wird. Zweckmäßigerweise wird das Heizelement elektrisch beheizt. Es liegt im Rahmen der Erfindung, dass das zumindest eine Heizelement zum Erwärmen bzw. Erhitzen des Lastübertragungsmaterials in das Lastverteilungsmaterial integriert bzw. eingebettet ist. Empfohlenermaßen wird als Heizelement zumindest ein Heizdraht und/oder zumindest eine Heizwendel eingesetzt. Dabei ist es bevorzugt, dass Heizelementabschnitte des Heizelementes gleichmäßig verteilt in dem Lastübertragungsmaterial angeordnet sind. Wenn nach sehr bevorzugter Ausführungsform der Erfindung ein elektrisch beheizbares Heizelement eingesetzt wird, erfolgt die elektrische Versorgung zweckmäßigerweise durch einen externen Generator. Der Generator kann beispielsweise mittels eines Schiffes oder dergleichen zum jeweiligen Montageort bzw. zur jeweiligen Gründungsstruktur transportiert werden.

Es liegt im Rahmen der Erfindung, dass das Lastübertragungsmaterial aus zumindest einem thermoplastischen Kunststoff bzw. im Wesentlichen aus zumindest einem thermoplastischen Kunststoff besteht. Vorzugsweise wird als thermoplastischer Kunststoff ein Polyolefin und besonders bevorzugt Polyethylen verwendet. Besonders bewährt hat sich dabei ein Polyethylen hoher Dichte (HDPE). - Zweckmäßigerweise wird das Lastübertragungsmaterial - bevorzugt der als Lastübertragungsmaterial eingesetzte thermoplastische Kunststoff - über seine maximale Temperaturbeständigkeit hinaus erhitzt. Es liegt somit im Rahmen der Erfindung, dass das Lastübertragungsmaterial bzw. der thermoplastische Kunststoff solange bzw. so stark erhitzt wird, dass eine Zersetzung des Materials erfolgt.

Gegenstand der Erfindung ist weiterhin eine Vorrichtung zur Erstellung eines Bauwerkes, insbesondere eines Offshore-Bauwerkes und vor allem zur Erstellung einer Offshore-Windkraftanlage, wobei ein zumindest bereichsweise hohler Gründungspfahl im Erdboden, insbesondere im Meeresboden verankert ist, wobei auf dem Gründungspfahl eine Auflagereinrichtung und eine Gründungsstruktur angeordnet ist, wobei die Auflagereinrichtung auf dem Gründungspfahl aufliegt bzw. auf der Oberkante des Gründungspfahls aufliegt, wobei die Gründungsstruktur zumindest einen in den hohlen Gründungspfahl hineinragenden Gründungsfortsatz aufweist, wobei zwischen dem Gründungsfortsatz und der Innenwandung des Gründungspfahls zumindest ein Spaltraum für die Verfüllung mit einem Vergussmaterial ausgebildet ist, wobei die Auflagereinrichtung zumindest eine untere Lastverteilungsplatte und zumindest eine obere Lastverteilungsplatte aufweist sowie eine zwischen den Lastverteilungsplatten angeordnete Schicht aus einem Lastübertragungsmaterial und wobei in oder an dem Lastübertragungsmaterial zumindest ein Heizelement zum Erwärmen bzw. Erhitzen des Lastübertragungsmaterials angeordnet ist.

Vorzugsweise sind die untere Lastverteilungsplatte und die obere Lastverteilungsplatte parallel bzw. im Wesentlichen parallel zueinander angeordnet. Zweckmäßigerweise hat die Schicht aus dem Lastübertragungsmaterial über ihre radiale Ausdehnung die gleiche Dicke bzw. im Wesentlichen die gleiche Dicke. Es liegt im Rahmen der Erfindung, dass das Lastübertragungsmaterial beim Erwärmen bzw. Erhitzen erweicht bzw. aufschmilzt oder sich zersetzt. Vorzugsweise wird dabei zwischen den beiden Lastverteilungsplatten ein sich in radialer Richtung erstreckender Zwischenraum ausgebildet, so dass bevorzugt keine direkte Verbindung zwischen der oberen Lastverteilungsplatte und der unteren Lastverteilungsplatte mehr vorhanden ist. Folglich werden Lasten von der oberen Lastverteilungsplatte nicht bzw. nicht mehr auf die untere Lastverteilungsplatte übertragen.

Der Erfindung liegt die Erkenntnis zugrunde, dass mit dem erfindungsgemäßen Verfahren und mit der erfindungsgemäßen Vorrichtung eine optimale Lastabtragung bei der Erstellung eines Bauwerkes, insbesondere bei der Erstellung einer Offshore-Windkraftanlage erreicht wird. Zunächst wird bei Durchführung des erfindungsgemäßen Verfahrens eine temporäre funktionssichere Auflagerung der Gründungsstruktur über die Auflagereinrichtung auf dem Gründungspfahl erreicht. Dabei werden zunächst temporär die Lasten über die Auflagereinrichtung bzw. über deren Lastverteilungsplatten und die Lastübertragungsschicht übertragen bzw. abgetragen. Bei dieser temporären Auflagerung der Gründungsstruktur kann dann der Spaltraum zwischen Gründungsstruktur und Gründungspfahl einfach und problemlos mit Vergussmaterial ausgefüllt werden. Besondere Bedeutung kommt der erfindungsgemäßen Auflagereinrichtung und dem Erwärmen bzw. Erhitzen des Lastübertragungsmaterials zu. Nach Erwärmen bzw. Erhitzen des Lastübertragungsmaterials und dem dadurch resultierenden Erweichen bzw. Aufschmelzen bzw. bevorzugt Zersetzen des Lastübertragungsmaterials erfolgt keine direkte Lastübertragung mehr von der oberen Lastverteilungsplatte zu der unteren Lastverteilungsplatte. Vielmehr werden die Lasten der Gründungsstruktur auf effektive und funktionssichere Weise im Wesentlichen in das erhärtete Vergussmaterial abgeleitet. Mit anderen Worten erfolgt keine wesentliche Lastabtragung mehr über die Oberkante des Gründungspfahls. Die gezielt erreichbare Lastabtragung während der einzelnen Verfahrensschritte ermöglicht in vorteilhafter Weise eine einfache und wenig aufwändige Planung und Umsetzung. Im Vergleich zu den aus der Praxis bekannten Verfahren wird mit dem erfindungsgemäßen Verfahren nach Erhärtung des Vergussmaterials und thermischer Zersetzung des Lastübertragungsmaterials eine wesentlich verbesserte und eindeutig definierte Ableitung der Lasten und Kräfte erzielt. Insgesamt lässt sich das erfindungsgemäße Verfahren und lässt sich die erfindungsgemäße Vorrichtung mit geringem Aufwand und mit relativ geringen Kosten realisieren.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer erfindungsgemäßen Vorrichtung im Schnitt,
- Fig. 2: den Gegenstand nach Fig. 1 in einer zweiten Funktionsstellung und
- Fig. 3: den Gegenstand gemäß Fig. 1 in einer dritten Funktionsstellung.

Die Figuren zeigen eine Vorrichtung zur Durchführung eines erfindungsgemäßen Verfahrens zur Erstellung einer Offshore-Windkraftanlage. Im Rahmen des erfindungsgemäßen Verfahrens wird zunächst bevorzugt und im Ausführungsbeispiel ein hohler Gründungspfahl 1 in den Meeresboden 2 eingebracht. Der Gründungspfahl 1 ist vorzugsweise und im Ausführungsbeispiel als Hohlzylinder ausgebildet. Auf dem Gründungspfahl 1 wird eine Gründungsstruktur 3 mit einer Auflagereinrichtung 4 aufgebracht, so dass die Auflagereinrichtung 4 auf dem Gründungspfahl 1 bzw. auf der Oberkante 5 des Gründungspfahls 1 aufliegt. Dazu hat die Auflagereinrichtung 4 zweckmäßigerweise und im Ausführungsbeispiel eine größere radiale Ausdehnung als der Gründungspfahl 1. Grundsätzlich können zwischen Auflagereinrichtung 4 und der Oberkante 5 des Gründungspfahls 1 nicht näher dargestellte Abstandshalter zum Toleranzausgleich bzw. zur Höhenjustierung angeordnet werden.

Vorzugsweise und im Ausführungsbeispiel weist die Gründungsstruktur 3 einen in den hohlen Gründungspfahl 1 hineinragenden Gründungsfortsatz 6 auf, sowie einen über die Gründung hinausragenden Gründungskörper. Zwischen dem Gründungsfortsatz 6 und der Innenwandung des hohlen Gründungspfahls 1 ist ein Spaltraum 8 ausgebildet und bevorzugt und im Ausführungsbeispiel läuft dieser Spaltraum 8 über den gesamten Umfang des Gründungsfortsatzes 6 um. Zweckmäßigerweise und im Ausführungsbeispiel ist der Gründungsfortsatz 6 zylinderförmig ausgebildet und bevorzugt zentralmittig in den Hohlraum des hohlen Gründungspfahls 1 eingesetzt. Dann ist der Spaltraum 8 vorzugsweise und im Ausführungsbeispiel als konzentrischer Ringspalt ausgeführt.

Die Auflagereinrichtung 4 weist empfohlenermaßen und im Ausführungsbeispiel eine obere Lastverteilungsplatte 9 und eine untere Lastverteilungsplatte 10 auf, wobei die Lastverteilungsplatten 9, 10 bevorzugt aus Stahl bestehen. Zwischen den Lastverteilungsplatten 9, 10 ist eine Schicht aus einem thermisch zersetzbaren Lastübertragungsmaterial 11 angeordnet. Gemäß vorteilhafter Ausgestaltung der Erfindung wird als Lastübertragungsmaterial 11 ein thermoplastischer Kunststoff eingesetzt. Bei diesem thermisch zersetzbaren Lastübertragungsmaterial 11 mag es sich im Ausführungsbeispiel um Polyethylen hoher Dichte (HDPE) handeln. In das thermisch zersetzbare Lastübertragungsmaterial 11 ist bevorzugt und im Ausführungsbeispiel ein Heizelement 12 integriert. Mit diesem Heizelement 12 ist das Lastübertragungsmaterial 11 vorzugsweise bis zu seiner Zersetzungstemperatur hin erwärmbar bzw. erhitzbar. Nach bevorzugter Ausführungsform und im Ausführungsbeispiel ist die obere Lastverteilungsplatte 9 an der Gründungsstruktur 3 fixiert und bevorzugt angeschweißt. Dagegen ist die untere Lastverteilungsplatte 10 nicht an der Gründungsstruktur 3 befestigt bzw. fixiert. Zweckmäßigerweise und im Ausführungsbeispiel ist die untere Lastverteilungsplatte 10 lediglich bzw. im Wesentlichen lediglich über das Lastübertragungsmaterial 11 an die obere Lastverteilungsplatte 9 angeschlossen.

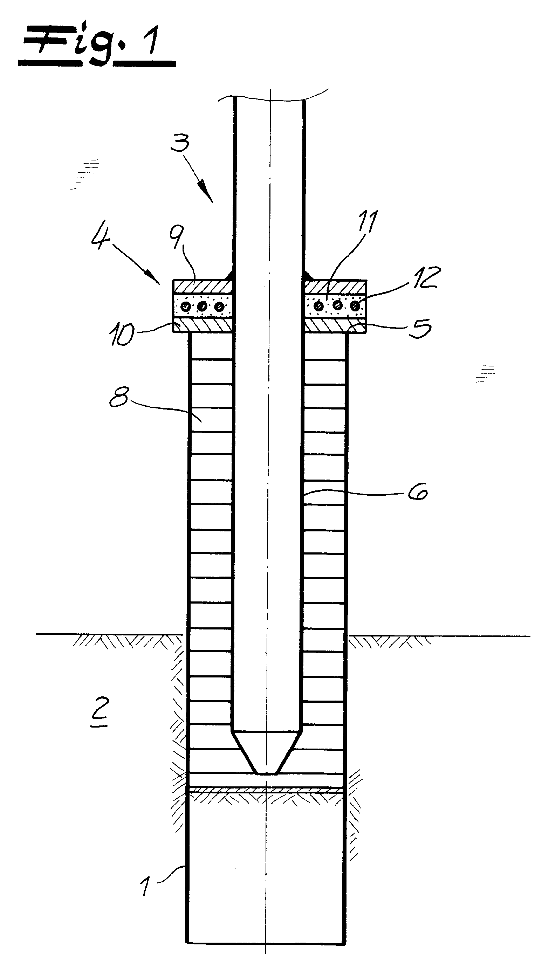

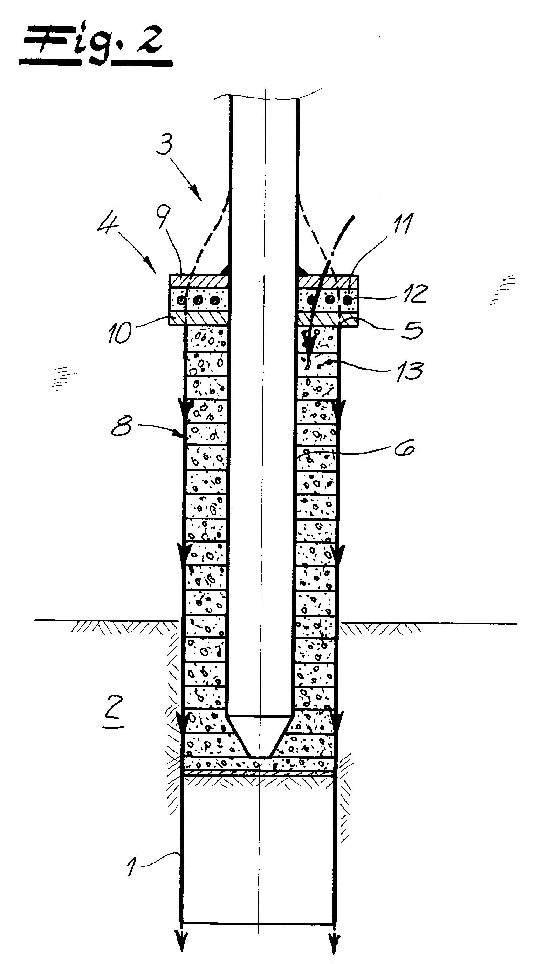

Bei dem erfindungsgemäßen Verfahren wird zunächst der Gründungspfahl 1 in den Meeresboden 2 eingebracht und bevorzugt in den Meeresboden 2 eingerammt. Anschließend wird die Gründungsstruktur 3 mit der Auflagereinrichtung 4 auf dem Gründungspfahl 1 aufgebracht, wobei bevorzugt und im Ausführungsbeispiel die untere Lastverteilungsplatte 10 der Auflagereinrichtung 4 auf der Oberkante 5 des Gründungspfahls 1 aufliegt. Daraufhin wird der Spaltraum zwischen dem Gründungsfortsatz 6 und dem Gründungspfahl 1 mit einem Vergussmaterial 13 - insbesondere in Form eines Vergussmörtels - gefüllt bzw. verpresst (siehe vergleichende Betrachtung der Fig. 1 und 2). Dabei wird der Spaltraum 8 bzw. der Ringspalt zwischen Gründungsfortsatz und Gründungspfahl 1 möglichst vollständig gefüllt bzw. ausgefüllt.

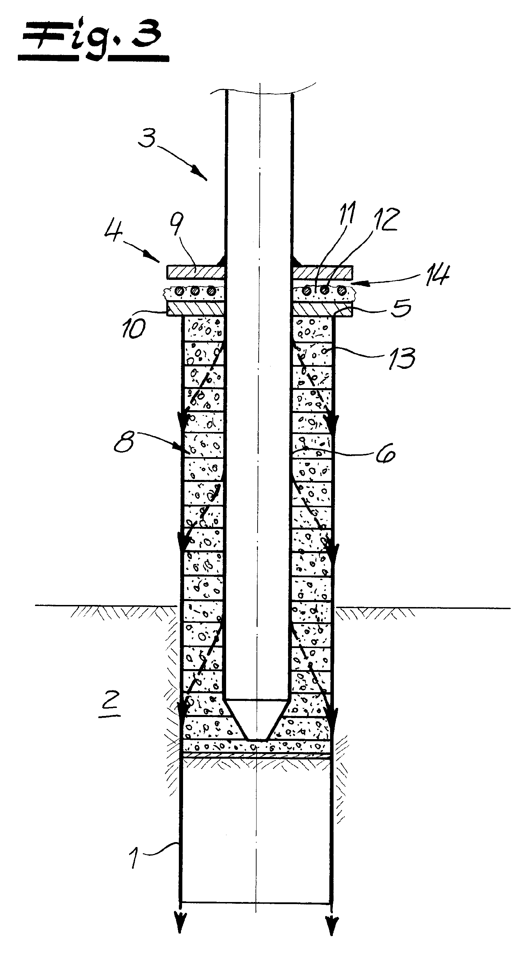

Nach dem Erhärten bzw. nach dem vollständigen Erhärten des Vergussmaterials 13 wird erfindungsgemäß das Lastübertragungsmaterial 11 erwärmt bzw. erhitzt und zwar bevorzugt bis zu seiner thermischen Zersetzung. Wie oben bereits dargelegt, erfolgt die Erwärmung bzw. Erhitzung über ein Heizelement 12, das zweckmäßigerweise und im Ausführungsbeispiel elektrisch beheizbar ist. Das Lastübertragungsmaterial 11 wird zumindest teilweise thermisch zersetzt. Dadurch ergibt sich zwischen der oberen Lastverteilungsplatte 9 und der unteren Lastverteilungsplatte 10 ein Spalt 14 (siehe Fig. 3), so dass zwischen oberer Lastverteilungsplatte 9 und unterer Lastverteilungsplatte 10 keine direkte Verbindung mehr bzw. im Wesentlichen keine direkte Verbindung mehr vorliegt. Das führt dazu, dass erfindungsgemäß die aus der Gründungsstruktur 3 resultierenden Lasten im Wesentlichen in das erhärtete Vergussmaterial 13 eingeleitet werden bzw. über das erhärtete Vergussmaterial 13 abgetragen werden. Dagegen wurden vor der erfindungsgemäßen Erwärmung bzw. Erhitzung des Lastübertragungsmaterials 11 die Kräfte bzw. Lasten im Wesentlichen bzw. zum Großteil über die Auflagereinrichtung 4 in den Gründungspfahl 1 eingeleitet. Diese Kraftbeaufschlagung bzw. Lastabtragung ist in den Figuren 2 und 3 durch entsprechende Pfeile verdeutlicht worden. Die Fig. 3 zeigt also, dass die Kräfte bzw. Lasten in erster Linie in das erhärtete Vergussmaterial 13 eingeleitet werden bzw. über das erhärtete Vergussmaterial 13 abgetragen werden. Dadurch zeichnet sich das erfindungsgemäße Verfahren gegenüber bislang bekannten Maßnahmen in vorteilhafter Weise aus.

## Patentansprüche

1. Verfahren zur Erstellung eines Bauwerkes, insbesondere eines Offshore-Bauwerkes und vor allem zur Erstellung einer Offshore-Windkraftanlage, wobei zumindest ein zumindest bereichsweise hohler Gründungspfahl (1) in den Erdboden, insbesondere in den Meeresboden (2) eingebracht wird, wobei auf den Gründungspfahl (1) eine Gründungsstruktur (3) mit einer Auflagereinrichtung (4) aufgebracht wird, so dass die Auflagereinrichtung (4) auf dem Gründungspfahl (1) aufliegt, wobei die Gründungsstruktur (3) zumindest einen in einen hohlen Gründungspfahl (1) hineinragenden Gründungsfortsatz (6) aufweist, wobei zwischen dem Gründungsfortsatz (6) und der Innenwandung des hohlen Gründungspfahls (1) zumindest ein Spaltraum (8) ausgebildet ist,
wobei die Auflagereinrichtung (4) zumindest eine untere Lastverteilungsplatte (10) sowie zumindest eine obere Lastverteilungsplatte (9) aufweist, wobei zwischen den Lastverteilungsplatten (9, 10) zumindest eine Schicht zumindest eines thermisch erweichbaren und/oder thermisch aufschmelzbaren und/oder thermisch zersetzbaren Lastübertragungsmaterials (11) angeordnet ist,
wobei nach dem Aufbringen der Gründungsstruktur (3) mit der Auflagereinrichtung (4) auf den Gründungspfahl (1) der Spaltraum (8) zwischen Gründungsfortsatz (6) und Gründungspfahl (1) mit zumindest einem Vergussmaterial (13) gefüllt bzw. ausgefüllt wird und wobei insbesondere nach dem Erhärten bzw. nach dem vollständigen Erhärten des Vergussmaterials (13) das Lastübertragungsmaterial (11) durch Erwärmen bzw. Erhitzen zumindest zum Teil thermisch erweicht und/oder thermisch aufgeschmolzen und/oder thermisch zersetzt wird.

2. Verfahren nach Anspruch 1, wobei mit einer Auflagereinrichtung (4) gearbeitet wird, die eine größere radiale Ausdehnung aufweist als der Gründungspfahl (1).

3. Verfahren nach einem der Ansprüche 1 oder 2, wobei zumindest die beiden Lastverteilungsplatten (9, 10) und vorzugsweise auch die Schicht aus dem Lastübertragungsmaterial (11) eine größere radiale Ausdehnung aufweisen als der Gründungspfahl (1).

4. Verfahren nach einem der Ansprüche 1 bis 3, wobei die untere Lastverteilungsplatte (10) und/oder die obere Lastverteilungsplatte (9) aus einem Metall bzw. im Wesentlichen aus einem Metall, vorzugsweise aus Stahl bzw. im Wesentlichen aus Stahl besteht/bestehen.

5. Verfahren nach einem der Ansprüche 1 bis 4, wobei die Auflagereinrichtung (4) mit der oberen Lastverteilungsplatte (9) an die Gründungsstruktur (3) angeschlossen ist bzw. an der Gründungsstruktur (3) fixiert ist.

6. Verfahren nach einem der Ansprüche 1 bis 5, wobei die untere Lastverteilungsplatte (10) nicht bzw. im Wesentlichen nicht an der Gründungsstruktur (3) fixiert ist.

7. Verfahren nach einem der Ansprüche 1 bis 6, wobei der Gründungsfortsatz (6) der Gründungsstruktur (3) über seinen Umfang von dem Spaltraum (8) zwischen Gründungsfortsatz (6) und der Innenwandung des Gründungspfahls (1) umgeben ist, wobei vorzugsweise der Gründungsfortsatz (6) zylinderförmig bzw. im Wesentlichen zylinderförmig ausgebildet ist.

8. Verfahren nach einem der Ansprüche 1 bis 7, wobei der Spaltraum (8) zwischen Gründungsfortsatz (6) und Gründungspfahl (1) mit einem Vergussmörtel und/oder mit Zement gefüllt bzw. ausgefüllt wird.

9. Verfahren nach einem der Ansprüche 1 bis 8, wobei das Lastübertragungsmaterial (11) mit zumindest einem Heizelement (12) erwärmt bzw. erhitzt wird.

10. Verfahren nach einem der Ansprüche 1 bis 9, wobei zumindest ein Heizelement (12) in das Lastübertragungsmaterial (11) integriert bzw. eingebettet ist.

11. Verfahren nach einem der Ansprüche 9 oder 10, wobei als Heizelement (12) ein Heizdraht und/oder eine Heizwendel eingesetzt wird.

12. Verfahren nach einem der Ansprüche 1 bis 11, wobei das Lastübertragungsmaterial (11) aus zumindest einem thermoplastischen Kunststoff bzw. im Wesentlichen aus zumindest einem thermoplastischen Kunststoff besteht.

13. Verfahren nach einem der Ansprüche 1 bis 12, wobei das Lastübertragungsmaterial (11) - vorzugsweise der als Lastübertragungsmaterial (11) eingesetzte thermoplastische Kunststoff - über seine maximale Temperaturbeständigkeit hinaus erhitzt wird.

14. Vorrichtung zur Erstellung eines Bauwerkes, insbesondere eines Offshore-Bauwerkes und vor allem zur Erstellung einer Offshore-Windkraftanlage, insbesondere für die Durchführung eines Verfahrens nach einem der Ansprüche 1 bis 13, wobei zumindest ein zumindest bereichsweise hohler Gründungspfahl (1) im Erdboden, insbesondere im Meeresboden (2) verankert ist, wobei auf dem Gründungspfahl (1) eine Auflagereinrichtung (4) und eine Gründungsstruktur (3) angeordnet ist, wobei die Auflagereinrichtung (4) auf dem Gründungspfahl (1) aufliegt, wobei die Gründungsstruktur (3) zumindest einen in den hohlen Gründungspfahl (1) hineinragenden Gründungsfortsatz (6) aufweist, wobei zwischen dem Gründungsfortsatz (6) und der Innenwandung des Gründungspfahls (1) zumindest ein Spaltraum (8) für die Verfüllung mit einem Vergussmaterial (13) ausgebildet ist, wobei die Auflagereinrichtung (4) zumindest eine untere Lastverteilungsplatte (10) und zumindest eine obere Lastverteilungsplatte (9) aufweist sowie eine zwischen den Lastverteilungsplatten (9, 10) angeordnete Schicht aus einem Lastübertragungsmaterial (11) und wobei in oder an dem Lastübertragungsmaterial (11) zumindest ein Heizelement (12) zum Erwärmen bzw. Erhitzen des Lastübertragungsmaterials (11) angeordnet ist.

15. Vorrichtung nach Anspruch 14, wobei die untere Lastverteilungsplatte (10) und die obere Lastverteilungsplatte (9) parallel bzw. im Wesentlichen parallel zueinander angeordnet sind.
